**Europäisches Patentamt**

**European Patent Office**

**Office européen des brevets**

(11) Veröffentlichungsnummer: **0 024 618**
**B1**

(19)

(12) : **EUROPÄISCHE PATENTSCHRIFT**

(45) Veröffentlichungstag der Patentschrift:
**29.06.83**

(51) Int. Cl.³: **H 04 B 9/00, H 04 N 7/02**

(21) Anmeldenummer: **80104736.6**

(22) Anmeldetag: **11.08.80**

(54) **Breitband-Fernmeidesystem.**

(30) Priorität: **24.08.79 DE 2934358**

(43) Veröffentlichungstag der Anmeldung:
**11.03.81 Patentblatt 81/10**

(45) Bekanntmachung des Hinweises auf die Patenterteilung:
**29.06.83 Patentblatt 83/26**

(84) Benannte Vertragsstaaten:
**AT BE CH DE FR GB IT LI LU NL SE**

(56) Entgegenhaltungen:
**EP-A-0 012 979**
**GB-A-1 486 421**

**NACHRICHTENTECHNISCHE ZEITSCHRIFT, Band 32, Heft 3, März 1979, VDE-Verlag GmbH, Berlin HELMUT BAUCH «Künftige Kommunikationstechnik mit Lichtleitern», Seiten 150–153**

(73) Patentinhaber: **SIEMENS AKTIENGESELLSCHAFT, Berlin und München Wittelsbacherplatz 2, D-8000 München 2 (DE)**

(72) Erfinder: **Bauch, Helmut, Dr., Waldstrasse 3a, D-8130 Starnberg (DE)**

Breitband-Fernmeldesystem

Neuere Entwicklungen der Fernmeldetechnik führen zu Breitbandkommunikationsnetzen mit durch Lichtwellenleiter gebildeten Teilnehmerleitungen, wobei sich in der Teilnehmerebene ein Sternnetz von Lichtwellenleitern mit einem Lichtwellenleiter je Wohnungseinheit als günstig erweist, der eine (zweckmässigerweise mit der nächstgelegenen Fernsprech-Vermittlungsstelle räumlich vereinigte) Breitband-Vermittlungsstelle mit der Wohnung des Teilnehmers verbindet und über den alle Fernmeldedienste für die betreffende Wohneinheit abgewickelt werden; typisch für einen zukunftssicheren Wohnungsanschluss ist dabei die Bereitstellung etwa folgender Kommunikationsmöglichkeiten:

3 Videokanäle für 3 Video-Empfänger mit unabhängigem Zugriff zu allen von der Vermittlungsstelle erreichbaren Fernsehsignalquellen bzw. in der Vermittlungsstelle verfügbaren Fernsehprogrammen,

24 Hörfunkkanäle,

3 64-kbit/s-Einheitskanäle eines integrierten Digital-Fernmeldenetzes (in beiden Übertragungsrichtungen),

1 Bildfernsprechkanal (in beiden Übertragungsrichtungen) und wenigstens

3 Rückkanäle zur Programmauswahl und ggf. zur Abwicklung interaktiver Dienste wie Bildschirmtext oder Zweiweg-Kabelfernsehen

(ntz 32(1979)3, 150...153). Dabei werden u.U. das integrierte Digital-Fernmeldenetz, Bildfernsprechen und Zweiweg-Kabelfernsehen erst in später Zeit realisiert, womit sich die Forderung nach möglichst geringen Vorleistungen dafür bei einer zunächst vorgesehenen Realisierung der übrigen Kommunikationsmöglichkeiten erhebt.

In solchen Breitbandkommunikationsnetzen sind die einzelnen Teilnehmer jeweils anhand des teilnehmer-individuellen Lichtwellenleiters für die Vermittlungsstelle identifizierbar, so dass insoweit auch Berechtigungen zum Empfang bestimmter Nachrichten bzw. Programme geprüft und eventuell anfallende Gebühren erfasst werden können. Dabei kann jedoch die Mehrzahl bei einem Teilnehmer vorhandener Empfänger dann problematisch sein, wenn mehrere Empfänger gleichzeitig dieselben Nachrichtensignale bzw. Programme empfangen; dies muss gegebenenfalls von der Vermittlungsstelle her, etwa zur zutreffenden Gebührenerfassung, feststellbar sein.

Die Erfindung zeigt nun einen Weg, solchen Umständen Rechnung zu tragen. Die Erfindung betrifft ein Breitband-Fernmeldesystem mit zwischen Vermittlungsstellen und Teilnehmerstellen verlaufenden Lichtwellenleitern, auf denen jeweils eine Mehrzahl von Videokanälen, Hörfunk-kanälen und Digitalsignal-Einheitskanälen, insbe-sondere 64-kbit/s-Kanälen, eines integrierten Di-gital-Fernmeldenetzes im Multiplex zusammen-fassbar sind, wobei jeweils teilnehmerseitig an den Lichtwellenleiter ein Opto/Elektro-Wandler angeschlossen ist, mit dem zur Trennung/Zusam-menführung von in Digitalfernmeldenetz-Einheits-kanälen übertragenen Digitalsignalen von/mit den Video- und Hörfunksignalen bzw. Rückkanalsignalen ggf. ein Demultiplexer/Multiplexer verbunden ist; dieses Breitband-Fernmeldesystem ist erfindungsgemäss dadurch gekennzeichnet, dass die Videosignale auf dem Lichtwellenleiter und auf einer wohneinheitsindividuell vorgesehenen, gemeinsam für Video- und Hörfunksignale zu benutzenden und zu einer oder mehreren Steckdosen mit getrennten Buchsen für Video- und Hörfunksignale führenden Koaxialleitung in den einzelnen an der Koaxialleitung gerade betriebenen Video-Empfängern individuell zugeordneten Übertragungskanälen übertragen werden, wobei lediglich die für einen an einer beliebigen Steckdose der Koaxialleitung betriebenen Video-Empfänger bestimmten Videosignale von einer emp-fängerindividuell fest eingestellten Kanalselek-tionseinrichtung in dem betreffenden Video-Empfänger wirksam gemacht werden.

Die Erfindung bringt den Vorteil mit sich, dass jeder Video-Empfänger eines Teilnehmers unabhängig davon, an welche Steckdose er gerade angeschlossen ist und welche Nachrichten bzw. Programme anderen Video-Empfängern des Teilnehmers gerade zugeführt werden, stets nur diejenigen Nachrichten empfangen kann, die nach Massgabe von in der Vermittlungsstelle gespei-cherten Bestimmungsinformationen für diesen Vi-deo-Empfänger bestimmt sind – wobei diese Bestimmung gerade von dem betreffenden Video-Empfänger her über dessen Rückkanal getroffen werden kann –, so dass in der Vermittlungsstelle stets eine eindeutige Zuordnung zwischen übertragenen Nachrichten bzw. Programm und Video-Empfänger gegeben und damit eine richtige und vollständige Erfassung in Anspruch genommener, etwa gebührenpflichtiger Dienste ermöglicht ist. Dabei werden zweckmässigerweise die für einen an einer beliebigen Steckdose der Koaxialleitung betriebenen Video-Empfänger bestimmten Videosignale von der betreffenden Steckdose zu einem empfängerindividuell fest eingestellten Kanalfilter-Demodulator geführt, von dem her die Signale dem Video-Empfänger zugeführt werden.

Gegebenenfalls kann man in einem Video-Über-tragungskanal auch Bildschirmtext-Signale über-tragen; in weiterer Ausgestaltung der Erfindung werden dann zweckmässigerweise solche in ei-nem Video-Übertragungskanal übertragenen Bild-schirmtext-Signale im Demodulator über einen gesonderten Ausgang ausgekoppelt und einem im Video-Empfänger vorgesehenen Bildschirmtext-Decoder zugeführt.

Zweckmässig ist es auch, dass in weiterer Aus-gestaltung der Erfindung von empfängerindivi-duellen Rückkanaleinrichtungen ausgehende Steuersignale in den einzelnen an der Koaxial-leitung betriebenen Video-Empfängern zugeord-neten Rückkanälen ebenfalls auf der Koaxialleitung übertragen werden, wobei die Rückkanalsignale von der Koaxialleitung über eine Weiche und gegebenenfalls den Multiplexer dem Opto/Elektro-Wandler für die Rückrichtung zugeführt werden können; für die Rückkanäle ist dann vorteilhafterweise kein eigener Leitungsaufwand erforderlich.

Alternativ können solche Rückkanalsignale aber auch auf einer gesonderten Leitung gebündelt in den einzelnen an der Koaxialleitung betriebenen Video-Empfängern zugeordneten Rückkanälen oder auf empfängerindividuellen Leitungen zum Opto/Elektro-Wandler für die Rückrichtung hin übertragen werden, wobei dann in Rückrichtung vor dem Optp/Elektro-Wandler keine Weiche benötigt wird.

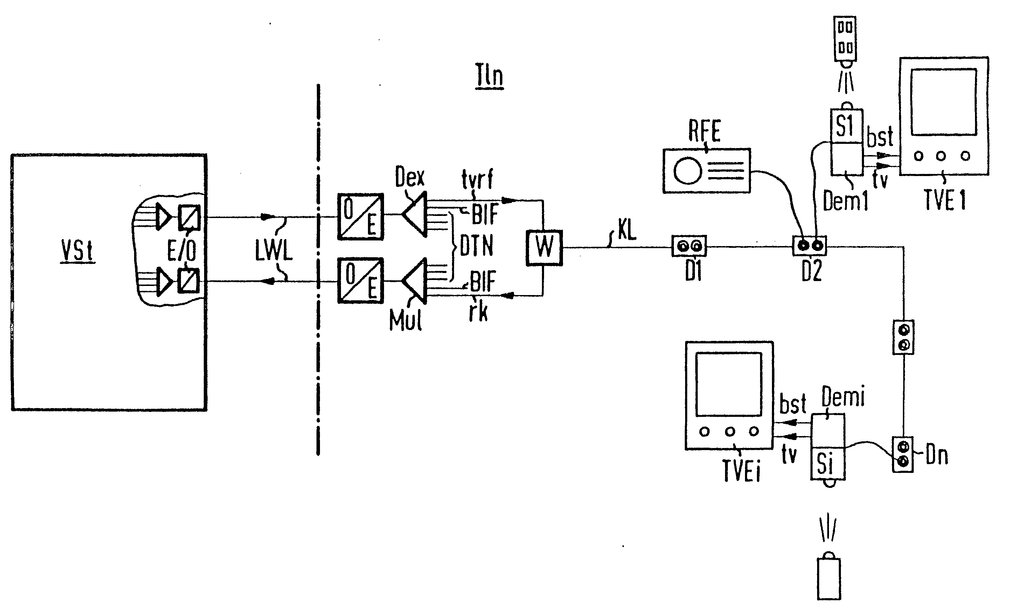

Anhand der Zeichnung sei die Erfindung noch näher erläutert.

In der Zeichnung ist schematisch in einem zum Verständnis der Erfindung erforderlichen Umfange ein Ausführungsbeispiel für ein Breitband-Fernmeldesystem gemäss der Erfindung dargestellt. Dieses Breitband-Fernmeldesystem weist eine Vermittlungsstelle VSt auf, an die ein Teilnehmer Tln über einen bzw. zwei Lichtwellenleiter LWL individuell angeschlossen ist; auf einem solchen Lichtwellenleiter LWL mögen jeweils eine Mehrzahl von Videokanälen, Hörfunkkanälen und (z. B. 64-kbit/s-)Einheitskanälen eines integrierten Digital-Fernmeldenetzes im Multiplex zusammengefasst sein. In der Zeichnung ist dazu angedeutet, dass der teilnehmerindividuelle Lichtwellenleiter LWL in der Vermittlungsstelle VSt über einen Elektro/Opto-(bzw. Opto/Elektro-)Wandler E/O mit einem Multiplexer bzw. Demultiplexer verbunden ist, dessen Eingänge bzw. Ausgänge mit dem betreffenden Teilnehmer entsprechenden Aus- bzw. Eingängen eines oder mehrerer in der Vermittlungsstelle VSt enthaltener Koppelfelder verbunden sein mögen. Teilnehmerseitig ist an den Lichtwellenleiter LWL ein Opto/Elektro- (bzw. Elektro/Opto-)Wandler O/E angeschlossen. Dem Opto/Elektro-Wandler O/E ist ein Demultiplexer Dex nachgeschaltet, an dessen Ausgängen DTN auf dem Lichtwellenleiter LWL in im Beispiel 64-kbit/s-Einheitskanälen des integrierten Digital-Fernmeldenetzes übertragene Digitalsignale von den auf der Ausgangsleitung tvrf auftretenden Video- und Hörfunksignalen getrennt auftreten und an dessen Ausgang BIF gegebenenfalls Bildfernsprechsignale auftreten können; in der umgekehrten Übertragungsrichtung ist dem (Elektro/Opto-)Wandler O/E ein Multiplexer Mul vorgeschaltet, der etwa an Eingängen DTN auftretende, in 64-kbit/s-Einheitskanälen des integrierten Digital-Fernmeldenetzes zu übertragende Digitalsignale und gegebenenfalls an einem Eingang BIF auftretende Bildfernsprechsignale mit auf einer Eingangsleitung rk auftretenden Rückkanalsignalen zusammenführt.

Es sei an dieser Stelle bemerkt, dass in der Zeichnung zwei Vermittlungsstelle VSt und Teilnehmer Tln miteinander verbindende Lichtwellenleiter LWL dargestellt sind, dass jedoch insbesondere bei Verzicht auf einen Breitbandrückkanal, wie er bei Zweiweg-Kabelfernsehen benötigt wird, der von der Vermittlungsstelle VSt zum Teilnehmer Tln führende Lichtwellenleiter grundsätzlich auch in der umgekehrten Übertragungsrichtung für die Rückkanäle mitausgenutzt werden kann.

Die die Video- und Rundfunksignale führende Ausgangsleitung tvrf des Demultiplexers Dex führt über eine Weiche W zu einer teilnehmer- bzw. wohneinheitindividuell vorgesehenen, gemeinsam für Video- und Hörfunksignale zu benutzenden Koaxialleitung KL, an die Steckdosen D1...Dn mit getrennten Buchsen für Video- und Hörfunksignale angeschlossen sind. Die Koaxialleitung kann dabei durch eine in der betreffenden Wohneinheit bereits vorhandene Koaxialleitung einer Antennenanlage gebildet sein, wie dies insbesondere in Einfamilienhäusern der Fall sein mag; der Lichtwellenleiter LWL endet dann beim Teilnehmer Tln zweckmässigerweise an einer Stelle, wo ohne grossen Aufwand ein Anschluss an die vorhandene Antennenanlage hergestellt werden kann. An die Steckdosen D1...Dn der Koaxialleitung KL können in beliebiger Verteilung Hörfunkempfänger und Video-Empfänger angeschlossen werden.

In der Zeichnung ist dazu angedeutet, dass an die Hörfunkbuchse der Steckdose D2 ein Hörfunkempfänger RFE angeschlossen ist. Die Hörfunksignale werden zweckmässigerweise in UKW-Frequenzlage mit der üblichen Stereotechnik über den Lichtwellenleiter LWL und die Koaxialleitung KL übertragen; ist eine Übertragung in dieser Form über den Lichtwellenleiter nicht möglich, so wird zweckmässigerweise unmittelbar hinter dem Opto/Elektro-Wandler O/E eine empfängergerechte Umsetzung in die UKW-Lage vorgesehen und das Hörfunksignal in dieser Form auf die Koaxialleitung KL gegeben. An der Steckdose kann dann jeder UKW-Empfänger direkt angeschlossen werden, wobei zur Herabsetzung einer Störbeeinflussung durch Videosignale nach oder besser in der Hörfunksteckdose eine entsprechender UKW-Bandpass vorgesehen sein kann.

Des weiteren ist in der Zeichnung angedeutet, dass an die Videobuchse der Steckdose D2 ein Video-Empfänger TVE1 angeschlossen ist und dass in entsprechender Weise an die Steckdose Dn ein Video-Empfänger TVEi angeschlossen ist. Die für die Video-Empfänger TVE1, TVEi bestimmten Videosignale werden nun (nach Massgabe von in der Vermittlungsstelle VSt jeweils gespeicherten Bestimmungsinformationen) dem ausgangsseitigen Multiplexer der Vermittlungsstelle VSt zugeführt, so dass die Videosignale auf dem Lichtwellenleiter LWL, auf der Ausgangsleitung tvrf des Demultiplexers Dex und auf der wohneinheitsindividuellen Koaxialleitung KL in Übertragungskanälen übertragen werden, die den einzelnen, an der Koaxialleitung KL gerade betriebenen Video-Empfängern TVE1, TVEi zugeordnet sind. Dabei gelangen die für einen an einer beliebigen Steckdose der Koaxialleitung betriebenen Video-Empfänger, beispielsweise für den an der Steckdose D2 betriebenen Video-Empfänger TVE1, bestimmten Videosignale von der betreffenden Steckdose zu einem empfängerindividuell fest eingestellten Kanalfilter-Demodulator, im Beispiel dem dem Video-Empfänger TVE1 zugehörigen Demodulator Dem1, von dessen Ausgang tv her die Signale unter Trennung von Bild- und Tonsignal dem Monitoreingang des Video-Empfängers TVE1 zuführbar sind. In entsprechender Weise können in dem in der Zeichnung dargestellten Breitband-Fernmeldesystem die für den gerade an der Steckdose Dn betriebenen Video-Empfänger TVEi bestimmten Videosignale von der Steckdose Dn zu einem dem Video-Empfänger TVEi zugehörigen Kanalfilter-Demodulator Demi gelangen, von dem her die Signale dem Monitoreingang des Video-Empfängers TVEi zugeführt werden. Bei Fernsehgeräten, die keinen Monitoreingang aufweisen, können die Videosignale auch in die VHF-Lage umgesetzt und in empfängergerechter Form einem HF-Eingang des Empfängers zugeführt werden.

Da die Video-Übertragungskanäle empfängerindividuell sind, kann man wahlweise auch Bildschirmtext-Signale über einen solchen Kanal übertragen. Solche Bildschirmtext-Signale werden im Demodulator Dem erkannt und über einen gesonderten Ausgang bst ausgekoppelt, von wo her sie einem dem Video-Empfänger TVE zugehörigen Bildschirmtext-Decoder zugeführt werden können.

Die Bestimmung darüber, welche Videosignale ein Video-Empfänger gerade empfangen will, kann von dem betreffenden Video-Empfänger her über dessen Rückkanal mit Hilfe von den Video-Empfängern TVE1, TVEi zugehörigen Rückkanaleinrichtungen S1, Si getroffen werden. In der Zeichnung ist dazu angedeutet, dass den Rückkanaleinrichtungen S1, Si beispielsweise durch eine Fernbedienungseinrichtung drahtlos Infrarot- oder Ultraschallsignale zugeführt werden können, die dann jeweils, ohne dass dies in der Zeichnung im einzelnen dargestellt ist, in den Rückkanaleinrichtungen in Digitalsignalworte von z.B. 8 Bits umgesetzt werden mögen, um dann in den einzelnen an der Koaxialleitung KL betriebenen Video-Empfängern TVE (bzw. ihren Rückkanaleinrichtungen) zugeordneten Rückkanälen ebenfalls auf der Koaxialleitung KL übertragen zu werden.

Dazu kann ein zu übertragendes codiertes Zeichen in der Rückkanaleinrichtung (z.B. S1) zunächst zwischengespeichert werden und dabei bei sämtlichen Rückkanaleinrichtungen (S1, Si) des Teilnehmers Tln nd in der Vermittlungsstelle VSt einen Übertragungszyklus anstossen, in welchem das genannte Zeichen und gegebenenfalls noch bei einer anderen Rückkanaleinrichtung (Si) des Teilnehmers Tln rechtzeitig auftretende Zeichen in den Rückkanaleinrichtungen S1...Si zugeordneten Zeitfächern des Übertragungszyklus über die Koaxialleitung KL und den Lichtwellenleiter LWL zur Vermittlungsstelle VSt hin übertragen werden. Alternativ zu einer solchen zeitlichen Trennung der Rückkanäle voneinander können die – vorzugsweise in ihrer Frequenzlage von den den Video-Empfängern TVE in Vorwärtsrichtung zugeordneten Übertragungskanälen getrennten – Rückkanäle aber auch in ihrer Frequenzlage voneinander getrennt sein.

Die auf der Koaxialleitung KL übertragenen Rückkanalsignale werden in der Weiche W von den in Vorwärtsrichtung übertragenen Video- und Tonfrequenzsignalen getrennt und über den Multiplexer Mul dem Elektro/Opto-Wandler O/E für die Rückrichtung zugeführt. Die optischen Signale können dann, wie in der Zeichnung angedeutet, über einen eigenen Lichtwellenleiter LWL oder, in Abweichung von der zeichnerischen Darstellung, im Wellenlängenmultiplex auf den gleichen Lichtwellenleiter wie die Vorwärtssignale übertragen werden.

Statt, wie vorstehend erläutert, das Rücksignal, das eine obere Frequenzgrenze in der Grössenordnung von 100 kHz hat, von der jeweiligen Rückkanaleinrichtung S1, Si her über eine Weiche demselben Anschlusskabel und damit auch der Koaxialleitung KL zuzuführen, über das auch das Vorwärtssignal übertragen wird, können die von den empfängerindividuellen Rückkanaleinrichtungen S1...Si ausgehenden Steuersignale auch auf empfängerindividuellen, vorzugsweise symmetrischen Leitungen zu dem dem Elektro/Opto-Wandler O/E für die Rückrichtung vorgeschalteten Multiplexer Mul oder zumindest bis zu einer neben der Koaxialleitung KL vorgesehenen, ihrerseits zum Multiplexer Mul führenden gesonderten Multiplexleitung übertragen werden.

An dieser Stelle sei noch bemerkt, dass in Abweichung von den in der Zeichnung dargestellten Verhältnissen an einem teilnehmerseitigen Opto/Elektro-Wandler O/E, wie er in der Zeichnung dargestellt ist, auch mehrere Koaxialleitungen parallel angeschlossen sein können, wobei gegebenenfalls auch nur eine Steckdose an eine solche Koaxialleitung angeschlossen sein kann.

Abschliessend sei bemerkt, dass bis zu einer Realisierung des Bildfernsprech-Dienstes der Bildfernsprechausgang BIF des Multiplexers Mul auch mit der die Video- und Hörfunksignale führenden Ausgangsleitung tvrf zusammengeschaltet werden kann; der Bildfernsprechkanal kann dann als TV-Kanal genutzt werden.

**Patentansprüche**

1. Breitband-Fernmeldesystem mit zwischen Vermittlungsstellen (VSt) und Teilnehmern (Tln) verlaufenden Lichtwellenleitern (LWL), auf denen jeweils eine Mehrzahl von Videosignalen, Hörfunkkanälen und Digitalsignal-Einheitskanälen, insbesondere 64-kbit/s-Kanälen, eines integrierten Digital-Fernmeldenetzes im Multiplex zusammenfassbar sind, wobei jeweils teilnehmerseitig an den Lichtwellenleiter (LWL) ein Opto/Elektro-Wandler (O/E) angeschlossen ist, mit dem zur Trennung/Zusammenführung von in Digitalfernmeldenetz-Einheitskanälen übertragenen Digitalsignalen von/mit den Video- und Hörfunksignalen bzw. Rückkanalsignalen gegebenenfalls ein Demultiplexer(Dex)/Multiplexer (Mul) verbunden ist, dadurch gekennzeichnet, dass die Videosignale auf dem Lichtwellenleiter (LWL) und auf einer wohneinheitsindividuell vorgesehenen, gemeinsam für Video- und Hörfunksignale zu benutzenden und zu einer oder mehreren Steckdosen (D1...Dn) mit getrennten Buchsen für Video- und Hörfunksignale führenden Koaxialleitung (KL) in den einzelnen, an der Koaxialleitung (KL) gerade betriebenen Video-Empfängern individuell zugeordneten Übertragungskanälen übertragen werden, wobei lediglich die für einen an einer beliebigen Steckdose (Dn) der Koaxialleitung (KL) betriebenen Video-Empfänger (TVEi) bestimmten Videosignale von einer empfängerindividuell fest eingestellten Kanalselektionseinrichtung in dem betreffenden Video-Empfänger (TVEi) wirksam gemacht werden.

2. Breitband-Fernmeldesystem nach Anspruch 1, dadurch gekennzeichnet, dass die für einen an einer beliebigen Steckdose (Dn) der Koaxialleitung (KL) betriebenen Video-Empfänger (TVEi) bestimmten Videosignale von der betreffenden Steckdose (Dn) zu einem empfängerindividuell fest eingestellten Kanalfilter-Demodulator (Demi) gelangen, von dem her die Signale dem Video-Empfänger (TVEi) zugeführt werden.

3. Breitband-Fernmeldesystem nach Anspruch 2, dadurch gekennzeichnet, dass die Signale, Bild- und Tonsignale getrennt, einem Monitoreingang des Video-Empfängers (TVEi) zugeführt werden.

4. Breitband-Fernmeldesystem nach Anspruch 2, dadurch gekennzeichnet, dass die Signale nach Umsetzung in die VHF-Lage einem HF-Eingang des Video-Empfängers (TVEi) zugeführt werden.

5. Breitband-Fernmeldesystem nach einem der Ansprüche 1 bis 4, dadurch gekennzeichnet, dass in einem Video-Übertragungskanal übertragene Bildschirmtext-Signale im Demodulator (Demi) über einen gesonderten Ausgang (bst) ausgekoppelt und einem dem Video-Empfänger (TVEi) zugehörigen Bildschirmtext-Decoder zugeführt werden.

6. Breitband-Fernmeldesystem nach einem der Ansprüche 1 bis 5, dadurch gekennzeichnet, dass von empfängerindividuellen Rückkanaleinrichtungen (Si) ausgehende Steuersignale in den einzelnen an der Koaxialleitung (KL) betriebenen Video-Empfängern (TVEi) zugeordneten Rückkanälen ebenfalls auf der Koaxialleitung (KL) übertragen werden.

7. Breitband-Fernmeldesystem nach Anspruch 6, dadurch gekennzeichnet, dass die Rückkanäle in ihrer Frequenzlage voneinander und von den den Video-Empfängern (TVEi) zugeordneten Übertragungskanälen getrennt sind.

8. Breitband-Fernmeldesystem nach Anspruch 6, dadurch gekennzeichnet, dass die Rückkanäle in ihrer Zeitlage voneinander und ihrer Frequenzlage von den den Video-Empfängern (TVE) zugeordneten Übertragungskanälen getrennt sind.

9. Breitband-Fernmeldesystem nach einem der Ansprüche 6 bis 8, dadurch gekennzeichnet, dass die Rückkanalsignale von der Koaxialleitung (KL) über eine Weiche (W) und ggf. den Multiplexer (Mul) dem Opto/Elektro-Wandler (O/E) für die Rückrichtung zugeführt werden.

10. Breitband-Fernmeldesystem nach einem der Ansprüche 1 bis 5, dadurch gekennzeichnet, dass von empfängerindividuellen Rückkanaleinrichtungen (Si) ausgehende Steuersignale in den einzelnen an der Koaxialleitung (KL) betriebenen Video-Empfängern (TVE) zugeordneten Rückkanälen auf einer gesonderten Leitung gebündelt zum Opto/Elektro-Wandler (O/E) für die Rückrichtung hin übertragen werden.

11. Breitband-Fernmeldesystem nach einem der Ansprüche 1 bis 5, dadurch gekennzeichnet, dass von den empfängerindividuellen Rückkanaleinrichtungen (Si) ausgehende Steuersignale jeweils auf einer empfängerindividuellen Leitung zu einem dem Opto/Elektro-Wandler (O/E) für die Rückrichtung vorgeschalteten Multiplexer (Mul) übertragen werden.

12. Breitband-Fernmeldesystem nach Anspruch 10 oder 11, dadurch gekennzeichnet, dass die Leitung als symmetrische Leitung ausgebildet ist.

13. Breitband-Fernmeldesystem nach einem der vorhergehenden Ansprüche, dadurch gekennzeichnet, dass am Opto/Elektro-Wandler (O/E) mehrere Koaxialleitungen (KL) parallel angeschlossen sind.

14. Breitband-Fernmeldesystem nach einem der vorhergehenden Ansprüche, dadurch gekennzeichnet, dass ein ungenutzter Bildfernsprech-Kanal als TV-Kanal genutzt wird.

**Claims**

1. A wide-band telecommunications system comprising light waveguides (LWL) between exchange stations (VSt) and subscribers (Tln), on each of which a plurality of video signals, radio channels and digital signal unit channels, in particular 64-kbit/s channels of an integrated digital telecommunications network can be combined in multiplex fashion, a respective opto/electronic transducer (O/E) is connected to the light waveguide (LWL) at the subscriber end, and to which opto/electro-transducer a de-multiplexer (Dex)/multiplexer (Mul) is possibly connected in order to separate/combine digital signals, which are transmitted in digital telecommunications network unit channels, from/with the video and radio signals and feedback channel signals, characterised in that the video signals are transmitted on the light waveguide (LWL) and on a coaxial line (KL), which is provided for each individual domestic unit, which is to be used for video and radio signals, and which leads to one or more sockets (D1...Dn) having separate jacks for video and radio signals, in the transmission channels which are individually assigned to the individual video receivers which are currently operated on the coaxial line (KL), only the video signals determined for a video receiver (TVEi) operated at a random socket (Dn) of the coaxial line (KL) are rendered operative by an individual receiver-adjusted channel selection device in the particular video receiver (TVEi).

2. A wide-band telecommunications system as claimed in Claim 1, characterised in that the video signals determined for a video receiver (TVEi) operated at a random socket (Dn) of the coaxial line (KL) are fed to an individual receiver adjusted channel filter demodulator (Demi) from which the signals are supplied to the video receiver (TVEi).

3. A wide-band telecommunications system as claimed in Claim 2, characterised in that the signals, picture and sound signals separately are fed to a monitor input of the video receiver (TVEi).

4. A wide-band telecommunications system as claimed in Claim 2, characterised in that following the transposition into the VHF-position, the signals are fed to an HF-input of the video receiver (TVEi).

5. A wide-band telecommunications system as claimed in one of Claims 1 to 4, characterised in that interactive teletext signals transmitted in a video transmission channel are output-coupled in the demodulator (Demi) by means of a separate output (bst) and supplied to an interactive teletext decoder assigned to the video receiver (TVEi).

6. A wide-band telecommunications system as claimed in one of Claims 1 to 5, characterised in that control signals emanating from individual receiver feedback channel devices (Si) are likewise transmitted on the coaxial line (KL) in the feedback channels which are assigned to individual video receivers operated on the coaxial line (KL).

7. A wide-band telecommunications system as claimed in Claim 6, characterised in that the feedback channels are separated from one another and from the transmission channels assigned to the video receivers (TVEi) in respect of their frequency position.

8. A wide-band telecommunications system as claimed in Claim 6, characterised in that the feedback channels are separated from one another in respect of their time position and are separated from the transmission channels assigned to the video receivers (TVE) in respect of their frequency position.

9. A wide-band telecommunications system as claimed in one of Claims 6 to 8, characterised in that the feedback channel signals are fed from the coaxial line (KL) via a separator (W) and if necessary the multiplexer (Mul) to the opto/electro-transducer (O/E) for the feedback direction.

10. A wide-band telecommunications system as claimed in one of Claims 1 to 5, characterised in that control signals emanating from individual receiver feedback channel devices (Si) are transmitted to the opto/electro transducer (O/E) for the feedback direction in a bunched fashion on a separate line in the feedback channels assigned to individual video receivers (TVE) which are operated on the coaxial line (KL).

11. A wide-band telecommunications system as claimed in one of Claims 1 to 5, characterised in that control signals emanating from the individual receiver feedback channel devices (Si) are transmitted on a respective individual receiver line to a multiplexer (Mul) which is connected preceding the opto/electro-transducer (O/E) for the feedback direction.

12. A wide-band telecommunications system as claimed in Claim 10 or 11, characterised in that the line is designed as a symmetrical line.

13. A wide-band telecommunications system as claimed in one of the preceding Claims, characterised in that a plurality of coaxial lines (KL) are connected in parallel to the opto/electro transducer (O/E).

14. A wide-band telecommunications system as claimed in one of the preceding Claims, characterised in that an unused video-telephone channel is used as a TV-channel.

## Revendications

1. Un système de télécommunications à large bande avec des conducteurs à fibre optique (LWL) reliant des centraux (VSt) et des abonnés (TIn), sur lesquels peuvent être groupés en multiplex une pluralité de canaux vidéo, de canaux audio et de canaux standards à signaux numériques, en particulier des canaux de 64 kbits/s, d'un réseau intégré de télécommunications numérique, un convertisseur opto-électronique (O/E) étant branché du côté usager au conducteur à fibre optique (LWL) et auquel est raccordé le cas échéant un démultiplexeur/(Dex) multiplexeur (Mul) pour la séparation/groupage de signaux, signaux transmis dans des canaux standards d'un réseau de télécommunications numérique de/ avec les signaux vidéo et audio ou les signaux de canal retour, caractérisé en ce que les signaux vidéo sont transmis sur le conducteur à fibre optique (LWL) et sur un conducteur coaxial (KL) prévu individuellement par unité d'habitation à utiliser en commun pour les signaux vidéo et radio et menant à un ou plusieurs boîtiers de raccordement (D1...Dn) à douilles séparées pour les signaux vidéo et radio dans les canaux de transmission associés individuellement aux récepteurs vidéo fonctionnant justement sur la ligne coaxiale (KL), les seuls signaux vidéo, qui sont destinés à un récepteur vidéo (TVEi) fonctionnant au niveau d'un boîtier de raccordement (Dn) quelconque, étant rendus efficaces par un dispositif de sélection de canal réglé de façon fixe et propre à un récepteur, prévu dans le récepteur vidéo (TVEi) concerné.

2. Système de télécommunications à large bande selon la revendication 1, caractérisé en ce que les signaux vidéo destinés à un récepteur vidéo (TVEi) branché sur un boîtier de raccordement quelconque (Dn) de la ligne coaxiale (KL) parviennent du boîtier de raccordement (Dn) correspondant à un démodulateur-filtre de canal (Demi) réglé de façon fixe et propre à un récepteur, à partir duquel les signaux sont appliqués au récepteur vidéo (TVEi).

3. Système de télécommunications à large bande selon la revendication 2, caractérisé en ce que les signaux, signaux d'image et de son séparés, sont appliqués à l'entrée moniteur du récepteur vidéo (TVEi).

4. Système de télécommunications à large bande selon la revendication 2, caractérisé en ce que les signaux, après conversion dans la gamme VHF, sont appliqués à une entrée HF du vidéo récepteur (TVEi).

5. Système de télécommunications à large bande, selon l'une des revendications 1 à 4, caractérisé en ce que des signaux vidéotexes transmis par un canal de transmission vidéo, sont découplés dans le démodulateur (Demi) par une sortie particulière (bst) et sont appliqués à un décodeur de vidéotexes appartenant au récepteur vidéo (TVEi).

6. Système de télécommunications à large bande selon l'une quelconque des revendications 1 à 5, caractérisé en ce que des signaux de commande issus de dispositifs de canal de retour (Si) propres à un récepteur sont également transmis sur la ligne coaxiale (KL), dans les différents canaux de retour associés aux récepteurs vidéo (TVEi) branchés sur la ligne coaxiale (KL).

7. Système de télécommunications à large bande selon la revendication 6, caractérisé en ce que les canaux de retour sont séparés en fréquence les uns par rapport aux autres et par rapport aux canaux de transmission associés aux récepteurs vidéo (TVEi).

8. Système de télécommunications à large bande selon la revendication 6, caractérisé en ce que les canaux de retour sont séparés temporellement les uns par rapport aux autres et en fréquence par rapport aux canaux de transmission associés aux récepteurs vidéo (TVEi).

9. Système de télécommunications à large bande selon l'une des revendications 6 à 8, caractérisé en ce que les signaux de canal de retour sont acheminés pour le sens retour vers le convertisseur opto-électronique (O/E) à partir de la ligne coaxiale (KL) et par l'intermédiaire d'un aiguillage (W) et le cas échéant par l'intermédiaire du multiplexeur (Mul).

10. Système de télécommunications à large bande selon l'une des revendications 1 à 5, caractérisé en ce que des signaux de commande, issus de dispositifs de canal de retour (Si) propres aux récepteurs sont transmis dans les différents canaux de retour associés aux récepteurs vidéo (TVE) fonctionnant sur la ligne coaxiale, avec groupage sur une ligne particulière, vers le convertisseur opto/électronique (O/E), pour le sens retour.

11. Système de télécommunications à large bande selon l'une des revendications 1 à 5, caractérisé en ce que des signaux de commande issus de dispositifs de canaux retour (Si) propres aux récepteurs, sont transmis par une ligne propre à chaque récepteur, vers le multiplexeur (Mul) branché en amont du convertisseur opto-électronique (O/E) pour le sens retour.

12. Système de télécommunications à large bande selon la revendication 10 ou 11, caractérisé en ce que la ligne est réalisée sous forme de ligne symétrique.

13. Système de télécommunications à large bande selon l'une des revendications précédentes, caractérisé en ce que plusieurs lignes coaxiales (KL) sont branchées en parallèle sur le convertisseur opto-électronique.

14. Système de télécommunication à large bande selon l'une des revendications précédentes, caractérisé en ce qu'un canal de vidéotéléphonie inutilisé est utilisé comme canal TV.